(19) Europäisches Patentamt
European Patent Office
Office européen des brevets

(11) **EP 0 875 740 B1**

(12) **EUROPÄISCHE PATENTSCHRIFT**

(45) Veröffentlichungstag und Bekanntmachung des Hinweises auf die Patenterteilung:
**11.10.2006 Patentblatt 2006/41**

(51) Int Cl.:
***G01F 23/296*** *(2006.01)*

(21) Anmeldenummer: **97107153.5**

(22) Anmeldetag: **30.04.1997**

(54) **Vorrichtung zur Feststellung und/oder Überwachung eines vorbestimmten Füllstands in einem Behälter**

Device for determining and/or monitoring of a predefined liquid level in a container

Dispositif pour la détermination et/ou la surveillance d'un niveau prédéterminé dans un réservoir

(84) Benannte Vertragsstaaten:
**DE FR GB IT**

(43) Veröffentlichungstag der Anmeldung:
**04.11.1998 Patentblatt 1998/45**

(73) Patentinhaber: **Endress + Hauser GmbH + Co. KG**
**79689 Maulburg (DE)**

(72) Erfinder:
• **Getman, Igor, Prof.**
**79540 Lörrach (DE)**

• **Lopatin, Sergej, Dr.**
**79539 Lörrach (DE)**

(56) Entgegenhaltungen:
**DE-A- 2 749 077      DE-A- 4 201 360**
**DE-A- 4 419 617      DE-A- 4 429 236**
**DE-C- 3 931 453      DE-C- 4 402 234**
**DE-C- 19 523 461**

EP 0 875 740 B1

**Beschreibung**

Die Erfindung betrifft eine Vorrichtung zur Feststellung und/oder Überwachung eines vorbestimmten Füllstandes in einem Behälter.

Derartige Füllstandsgrenzschalter werden in vielen Industriezweigen, insb. in der Chemie und in der Lebensmittelindustrie eingesetzt. Sie dienen zur Grenzstanddetektion und werden z.B. als Überfüllsicherung oder als Pumpenleerlaufschutz verwendet.

In der DE-A 44 19 617 ist eine Vorrichtung zur Feststellung und/oder Überwachung eines vorbestimmten Füllstandes in einem Behälter beschrieben. Diese umfaßt:

-   ein auf der Höhe des vorbestimmten Füllstandes angebrachtes mechanisches Schwingungsgebilde,
-   einen elektromechanischen Wandler,

    -- der mindestens einen Sender aufweist,

        --- an dem ein elektrisches Sendesignal anliegt und
        --- der das mechanische Schwingungsgebilde zu Schwingungen anregt, und

    -- der einen Empfänger aufweist,

        --- der die mechanischen Schwingungen des Schwingungsbildes aufnimmt und in ein elektrisches Empfangssignal umwandelt,

-   eine Auswerteeinheit,

    -- die das Empfangssignal aufnimmt und dessen Frequenz bestimmt, dieses mit einer Referenzfrequenz vergleicht und ein Ausgangssignal erzeugt das angibt, daß das mechanische Schwingungsgebilde von einem Füllgut bedeckt ist, wenn die Frequenz einen Wert aufweist der kleiner als die Referenzfrequenz ist, und daß es nicht bedeckt ist, wenn der Wert größer ist, und

-   einen Regelkreis, der eine zwischen dem elektrischen Sendesignal und dem elektrischen Empfangssignal bestehende Phasendifferenz auf einen bestimmten konstanten Wert regelt, bei dem das Schwingungsgebilde Schwingungen mit einer Resonanzfrequenz ausführt.

Der Regelkreis wird z. B. dadurch gebildet, daß das Empfangssignal verstärkt und über einen Phasenschieber auf das Sendesignal zurück gekoppelt wird.

In der DE-C 195 23 461 ist eine Vorrichtung zur Feststellung und/oder Überwachung eines vorbestimmten Füllstandes in einem Behälter beschrieben, bei der ein auf der Höhe des vorbestimmten Füllstands angebrachtes mechanisches Schwingungsgebilde durch ein einziges piezoelektrisches Element zu Schwingungen angeregt wird. Dieses Element nimmt die Schwingungen des mechanischen Schwingungsgebildes auf und wandelt sie in ein elektrisches Empfangssignal um. Es dient also sowohl als Sender als auch als Empfänger und weist eine Sendeelektrode und eine Empfangselektrode auf.

Bei diesen Vorrichtungen handelt es sich um komplexe Schwingungssysteme, die sich jeweils aus einem mechanischen Schwingungsgebilde, einem elektromechanischen Wandler und dem Regelkreis zusammensetzen. Die einzelnen Komponenten sind nicht vollständig elektrisch und mechanisch voneinander getrennt. Es treten sowohl elektrische als auch mechanische Kopplungen auf.

Folglich umfaßt das Empfangssignal nicht nur das gewünschte Meßsignal, das auf die Schwingung des jeweiligen mechanischen Schwingungsgebildes zurückgeht, sondern auch zusätzliche Signale, die durch die vorgenannten Kopplungen entstehen.

Bisher war es nicht möglich derartige Vorrichtungen auch für Messungen in hochviskosen Medien oder in wasserhaltigen oder zähen Schäumen einzusetzen, da bei diesen Anwendungen eine zuverlässige Anregung des mechanischen Schwingungsgebildes zu Schwingungen bei der Resonanzfrequenz nicht gewährleistet ist.

Der feste Wert der Phasendifferenz entspricht der Resonanz des Systems wenn das Schwingungsgebilde in Gasen oder in Flüssigkeiten schwingt. Reduziert sich die Schwingungsgüte der Vorrichtung jedoch aus irgendeinem Grund, so hat dies zur Folge, daß der feste Wert der Phasendifferenz nicht mehr existiert. Es gibt keine Frequenz bei der das mechanische Schwingungsgebilde Schwingungen mit einer von null verschiedenen Amplitude ausführt und die Phasendifferenz den festen Wert aufweist. Diese Phasendifferenz kann durch den Regelkreis nicht eingestellt werden. Es tritt somit eine Fehlfunktion auf.

Eine Reduktion der Schwingungsgüte tritt z.B. dann auf, wenn die Bewegung des mechanischen Schwingungsgebildes gedämpft wird, z.B. indem es in ein viskoses Medium oder in flüssigkeitshaltigen oder zähen Schaum eingetaucht ist. Weiterhin wird die Schwingungsgüte reduziert durch Energieverluste innerhalb der Vorrichtung, z.B. bedingt durch Materialermüdungen oder durch Asymmetrien, z.B. aufgrund asymmetrischer Ansatzbildung, die zu asymmetrischen Rückstellkräften führen. Prinzipiell führt jede Art des Energieverlustes, sei es an ein Füllgut abgegebene Schwingungsenergie oder über eine Befestigung der Vorrichtung an den Behälter abgegebene Energie, zu einer Reduktion der Schwingungsgüte.

Es ist eine Aufgabe der Erfindung, eine Vorrichtung zur Feststellung und/oder Überwachung eines vorbestimmten Füllstands in einem Behälter anzugeben, bei der das Empfangssignal möglichst gleich dem gewünschten Meßsignal ist und keine zusätzlichen durch Kopplungen bedingte Signale enthält.

Eine weitere Aufgabe der Erfindung besteht darin, eine derartige Vorrichtung anzugeben, bei der zwischen dem Sendesignal und dem Empfangssignal bei der Resonanzfrequenz des mechanischen Schwingungsgebildes eine feste Phasendifferenz besteht, die unabhängig von der Schwingungsgüte der Vorrichtung ist.

Dies wird erfindungsgemäß gelöst, durch eine Vorrichtung zur Feststellung und/oder Überwachung eines vorbestimmten Füllstandes in einem Behälter, welche Vorrichtung umfaßt:

- ein auf der Höhe des vorbestimmten Füllstandes angebrachtes mechanisches Schwingungsgebilde,
- ein piezolelektrisches Element,

    -- das das Schwingungsgebilde zu Schwingungen anregt und dessen Schwingungen aufnimmt,
    -- das mindestens drei Bereiche aufweist,

       --- einen ersten eine Empfangselektrode aufweisenden Bereich, einen zweiten eine erste Sendeelektrode aufweisenden Bereich und einen dritten eine zweite Sendeelektrode aufweisenden Bereich,

- wobei die beiden Sendeelektroden formgleich sind und symmetrisch zueinander und zu der Empfangselektrode angeordnet sind,
- wobei das piezoelektrische Element im ersten und im zweiten Bereich eine Polarisation aufweist, die einer Polarisation des dritten Bereichs entgegengerichtet ist, und
- wobei an der ersten Sendeelektrode ein erstes Sendesignal anliegt, das amplitudengleich und gegenphasig zu einem an der zweiten Sendeelektrode anliegenden zweiten Sendesignal ist.

Gemäß einer Ausgestaltung der Erfindung ist ein Regelkreis vorgesehen, der eine zwischen dem ersten Sendesignal und dem Empfangssignal bestehende Phasendifferenz auf einen bestimmten konstanten Wert regelt, bei dem das Schwingungsgebilde Schwingungen mit einer Resonanzfrequenz ausführt.

Gemäß einer weiteren Ausgestaltung auf dem piezoelektrischen Element eine mit einem Bezugspotential verbundene Referenzelektrode angeordnet.

Gemäß einer weiteren Ausgestaltung ist das piezoelektrische Element scheibenförmig ist und die Empfangselektrode und die beiden Sendeelektroden sind auf einer Kreisfläche desselben angeordnet.

Gemäß einer weiteren Ausgestaltung sind die beiden Sendeelektroden Kreisringsegmente und auf einander diametral gegenüberliegenden Kreisringsegmenten der Kreisfläche angeordnet.

Gemäß einer weiteren Ausgestaltung liegt das erste Sendesignal an einem Inverter an und das zweite Sendesignal ist gleich einem Ausgangssignal des Inverters .

Die Erfindung und weitere Vorteile werden nun anhand der Figuren der Zeichnung, in denen ein Ausführungsbeispiel dargestellt ist, näher erläutert; gleiche Elemente sind in den Figuren mit gleichen Bezugszeichen versehen.

Fig. 1     zeigt einen Längsschnitt durch ein mechanisches Schwingungsgebilde mit einem piezoelektrischen Element;

Fig. 2     zeigt eine schematische Darstellung des piezoelektrischen Elements von Fig. 1 und eine daran angeschlossene Schaltung;

Fig. 3     zeigt eine erfindungsgemäße Anordnung der Sende- und Empfangselektroden;

Fig. 4a    zeigt die Amplitude des Meßsignals in Abhängigkeit von der Frequenz bei hoher und bei niedriger Schwingungsgüte;

Fig. 4b    zeigt die Phase des Meßsignals in Abhängigkeit von der Frequenz bei hoher und bei niedriger Schwingungsgüte;

Fig. 5a    zeigt die Amplitude eines zusätzlichen Signals in Abhängigkeit von der Frequenz;

Fig. 5b    zeigt die Phase eines ersten zusätzlichen Signals in Abhängigkeit von der Frequenz;

Fig. 6a    zeigt die Amplitude des Empfangssignals in Abhängigkeit von der Frequenz bei hoher und bei niedriger Schwingungsgüte;

Fig. 6b    zeigt die Phase des Empfangssignals in Abhängigkeit von der Frequenz bei hoher und bei niedriger Schwingungsgüte;

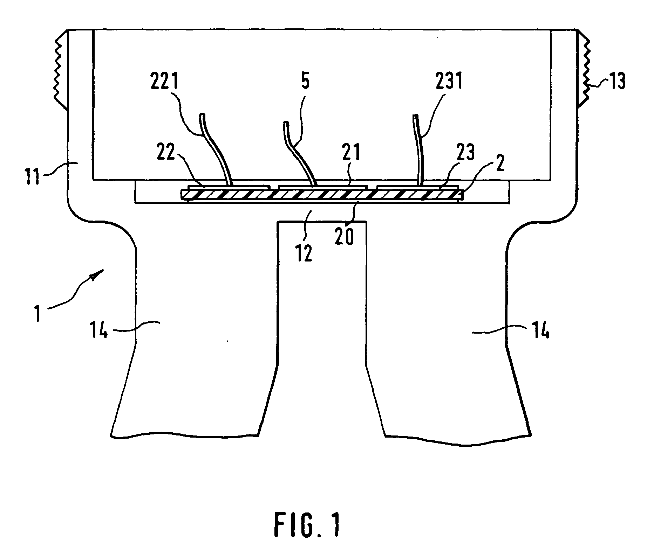

In Fig. 1 zeigt einen Längsschnitt durch ein Ausführungsbeispiel eines mechanischen Schwingungsgebildes 1. Es weist ein im wesentlichen zylindrisches Gehäuse 11 auf, das von einer kreisförmigen Membran 12 frontbündig abgeschlossen ist. An das Gehäuse 11 ist ein Gewinde 13 angeformt, mittels dessen die Vorrichtung in eine nicht dargestellte auf der Höhe des vorbestimmten Füllstands angeordnete Öffnung in einem Behälter einschraubbar ist. Andere dem Fachmann bekannte Befestigungsweisen, z.B. mittels an dem Gehäuse 11 angeformter Flansche, sind ebenfalls einsetzbar.

An der Außenseite des Gehäuses 11 sind an der Membran 12 zwei in den Behälter weisende Schwingstäbe 14 angeformt. Diese werden durch einen im Inneren des Gehäuses 11 auf der Membran 12 angeordnetes scheibenförmiges piezoelektrisches Element 2 in Schwingungen senkrecht zu deren Längsachse versetzt.

Die Erfindung ist jedoch nicht auf mechanische Schwingungssysteme mit zwei Schwingstäben beschränkt; sie kann auch bei Grenzschaltern eingesetzt werden, die nur einen oder keine Schwingstäbe aufweisen. Bei den letztgenannten kommt z.B. nur die schwingende Membran mit einem in dem Behälter befindlichen Füllgut in Kontakt.

Auch sind Vorrichtungen einsetzbar, bei denen das piezoelektrische Element 2 auf einer parallel zu der das Gehäuse abschließenden Membran angeordneten zweiten Membran montiert ist. Eine Übertragung der Schwingung der zweiten Membran auf die das Gehäuse abschließende Membran erfolgt dabei z.B. indem die zweite Membran an deren äußeren Rand gehaltert oder eingespannt ist und von deren Mitte eine mechanische Verbindung zu der Mitte der anderen Membran besteht. Diese Verbindung ist z.B. eine beide Membranen verbindende Spannschraube oder ein an der inneren Membran angeformter Stempel.

Besteht das Gehäuse 11 aus Metall so kann das piezoelektrische Element 2 direkt auf der Membran 12 angebracht, z.B. angeklebt werden. Das vorzugsweise geerdete Gehäuse dient dann als Referenzelektrode.

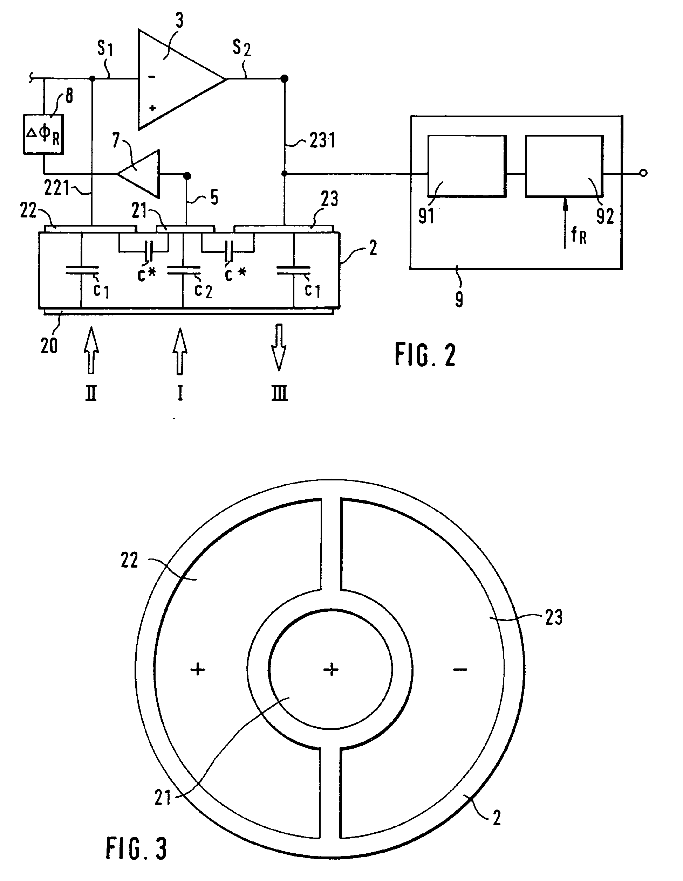

Besteht das Gehäuse 11 dagegen aus einem Isolator, so ist zwischen Membran 12 und piezoelektrischem Element 2 eine Referenzelektrode 20 anzuordnen, die mit einem Bezugspotential, vorzugsweise dem Erdpotential zu verbinden ist. Fig. 2 zeigt eine schematische Darstellung des piezoelektrischen Elements 2.

Auf einer membran-abgewandten Kreisfläche des piezoelektrischen Elements 2 sind eine Empfangselektrode 21 und zwei Sendeelektroden 22, 23 angeordnet. Dies ist in Fig. 3 dargestellt. Die Empfangselektrode 21 ist mit einer Empfangssignalleitung 5 verbunden über die ein Empfangssignal E zur Verfügung steht. Die beiden Sendeelektroden 22, 23 sind jeweils mit einer Sendesignalleitung 221, 231 verbunden. An diesen Sendesignalleitungen 211, 231 anliegende Sendesignale $S_1$, $S_2$, z.B. Wechselspannungen, versetzen das piezoelektrische Element 2 und die fest damit verbundene Membran 12 in Biegeschwingungen. Hierdurch werden die endseitig an die Membran 12 angeformten Schwingstäbe 14 in Schwingungen senkrecht zu deren Längsachse versetzt.

Umgekehrt bewirkt eine Schwingung der Schwingstäbe 14 eine Biegeschwingung der Membran 12 und des mit dieser fest verbundenen piezoelektrischen Elements 2.

Das Empfangsignal E weist eine Amplitude A auf, die umso größer ist, je größer die mechanische Schwingungsamplitude der Schwingstäbe 14 ist. In Ausnutzung dieser Tatsache wird die Vorrichtung vorzugsweise bei deren Resonanzfrequenz $f_r$ betrieben. Bei der Resonanzfrequenz $f_r$ ist die mechanische Schwingungsamplitude maximal.

Betrachtet man einen harmonischen Oszillator als Beispiel für ein ideales Schwingungssystem, so weist dessen Schwingungsamplitude ein einziges Maximum in Abhängigkeit von der Schwingungsfrequenz auf. Die Phasendifferenz zwischen der Schwingungsanregung und der Schwingung des Oszillator erfährt im Bereich dieses Maximums einen Phasensprung von 180°. Bei der Resonanzfrequenz ist die Schwingungsamplitude maximal und die Phasendifferenz beträgt 90°.

Bei Vorrichtungen dieser Art, wie sie aus dem Stand der Technik bekannt sind, ist üblicherweise nur eine Sendeelektrode und nur eine Empfangselektrode vorgesehen. Eine solche Vorrichtung wird in Schwingungen bei deren Resonanzfrequenz $f_r$ versetzt, indem ein Regelkreis vorgesehen ist, der eine zwischen dem elektrischen Sendesignal und einem Elektrodensignal bestehende Phasendifferenz auf einen bestimmten konstanten Wert regelt.

Bei einem harmonischen Oszillator bewirkt eine Dämpfung oder eine Reduktion der Schwingungsgüte eine Reduktion der maximalen Amplitude im Resonanzfall. Die Phase steigt in einem solchen Fall in Abhängigkeit von der Frequenz nicht sprunghaft sondern kontinuierlich an und zwar um so langsamer, je größer die Dämpfung bzw. die Reduktion der Schwingungsgüte ist. Insgesamt erfolgt jedoch auch bei sehr großer Dämpfung eine Phasenänderung von insgesamt 180° und bei der Resonanzfrequenz besteht eine Phasendifferenz von 90°. Der feste der Resonanz entsprechende Wert der Phasendifferenz von 90° existiert immer und wird bei der Resonanzfrequenz angenommen.

Im Unterschied zu einem idealen Oszillator bestehen bei den oben genannten Vorrichtungen aus dem Stand der Technik Kopplungen elektrischer und mechanischer Art zwischen dem piezoelektrischen Element 2, der Sendeelektrode, der Empfangselektrode und dem mechanischen Schwingungsgebilde.

Mechanische Kopplungen, wie sie z. B. durch Verspannungen des piezoelektrischen Elements 2 auftreten könnten, sind bei Vorrichtungen, die nur ein einziges piezoelektrisches Element 2 aufweisen, vernachlässigbar gering und werden daher nachfolgend nicht berücksichtigt.

Elektrische Kopplungen bestehen zwischen der Sendeelektrode und der Referenzelektrode, zwischen der Empfangselektrode und der Referenzelektrode und zwischen der Empfangselektrode und der Sendeelektrode. Sie können in Form eines Ersatzschaltbildes durch die jeweiligen Elektroden verbindende Kapazitäten dargestellt werden.

Diese kapazitive Kopplung bewirkt, daß an der Empfangselektrode auch dann ein von null verschiedenenes Signal $E_1$ anliegt, wenn die Schwingstäbe 14 fest eingespannt sind und die Membran 12 und das piezoelektrische Element 2 keine mechanische Bewegung ausführen.

Das an einer Empfangselektrode anstehende Signal $E_1$ setzt sich aus zwei Komponenten zusammen, nämlich einem Meßsignal $E_{M1}$ und einem durch die elektrische Kopplung bedingten zusätzlichen Signal $E_{el1}$.

$$E_1 = E_{M1} + E_{el1}$$

Das Meßsignal $E_{M1}$ beruht auf der Schwingung des mechanischen Schwingungsgebildes und weist eine frequenzabhängige Amplitude $A_{M1}(f)$ und eine frequenzabhängige Phase $\Delta\phi_{M1}(f)$ auf. Mit Phase ist hier jeweils der Phasenversatz bezeichnet, den die jeweilige Komponente des elektrischen Signals $E_1$ bezogen auf das elektrische Sendesignal aufweist.

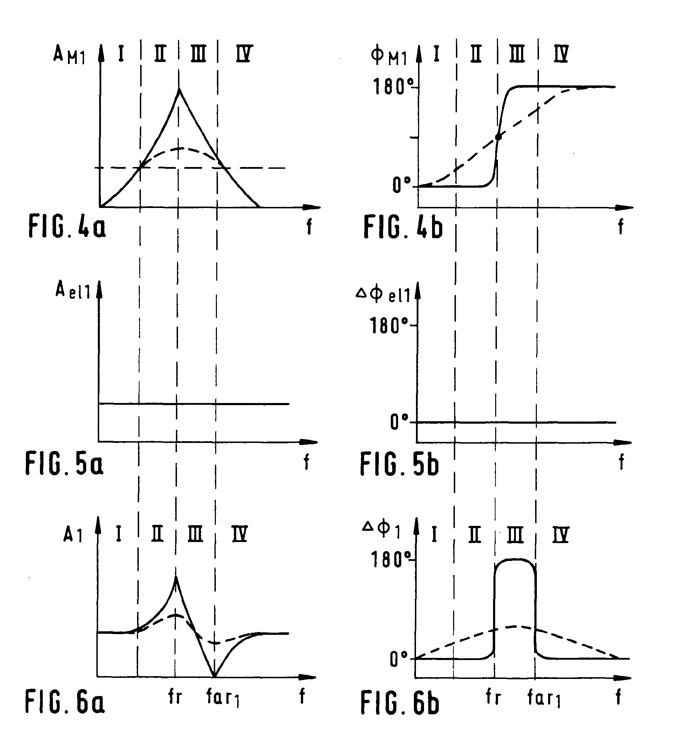

Fig. 4a zeigt die Amplitude $A_{M1}(f)$ und Fig. 4b die Phase $\Delta\phi_{M1}(f)$ des Meßsignals $E_{M1}$ in Abhängigkeit von der Frequenz f. Die Kurven können rechnerisch durch Simulationsrechnungen, z.B. durch Finite-Elemente-Rechnungen bestimmt werden.

Experimentell können sie ausgemessen werden, indem die Sendesignalleitung an einen Frequenzgenerator angeschlossen wird und Phase und Amplitude der Schwingung der Schwingstäbe 14 in Abhängigkeit von der Frequenz des Frequenzgenerators, z.B. mit einem Laservibrometer, bestimmt werden.

In beiden Figuren 4a, 4b entspricht jeweils die durchgezogene Linie einer Vorrichtung mit hoher Schwingungsgüte und die gestrichelte Linie einer Vorrichtung mit niedriger Schwingungsgüte. Sowohl die Amplitude $A_{M1}(f)$ als auch die Phase $\Delta\phi_{M1}(f)$ des Meßsignals weist in beiden Fällen den für einen harmonischen Oszillator typischen vorgehend bereits beschriebenen Verlauf auf.

Das zusätzlichen Signal $E_{el1}$ weist eine im wesentlichen konstante Amplitude $A_{el1}$ und eine im wesentlichen konstante Phase $\Delta\phi_{el1}$ auf. Mit Phase ist auch hier der Phasenversatz der jeweiligen Komponente des elektrischen Signals $E_1$ bezogen auf das elektrische Sendesignal bezeichnet.

Die durchgezogene Linie in Fig. 5a zeigt die Amplitude $A_{el1}$ und die durchgezogene Linie in Fig. 5b die Phase $\Delta\phi_{el1}$ des zusätzlichen Signals $E_{el1}$ in Abhängigkeit von der Frequenz f. Auch diese Kurven können durch Simulationsrechnungen ermittelt werden. Experimentell können sie z.B. aufgenommen werden, indem ein nicht-polarisiertes piezoelektrisches Element eingesetzt wird. Bei diesem wird durch ein Sendesignal keinerlei mechanische Bewegung erzeugt und das Signal $E_1$ entspricht folglich dem auf elektrischer Kopplung beruhenden zusätzlichen Signal $E_{el1}$. Dieses kann mittels eines Oszilloskops ausgemessen werden.

Die Amplitude $A_{el1}$ und die Phasen $\Delta\phi_{el1}$ des zusätzlichen Signals $E_{el1}$ steht in eindeutigem Zusammenhang zu dem mechanischen Aufbau der jeweiligen Vorrichtung und deren elektrischen Eigenschaften. In dem in den Figuren 4a, 4b, 5a, 5b, 6a und 6b gezeigten Beispiel einer eingangs beschriebenen Vorrichutng aus dem Stand der Technik weist das zusätzliche Signal $E_{el1}$ eine Phase von 0° auf.

Fig. 6a zeigt die Amplitude $A_1(f)$ und Fig. 6b die Phase $\Delta\phi_1(f)$ des Signals $E_1$. Die beiden Kurven ergeben sich aus der phasen- und amplitudengetreuen Überlagerung der beiden zuvor beschriebenen Komponenten des Signals $E_1$.

$$E_1 e^{i\Delta\phi_1} = A_{M1} e^{i\Delta\phi_{M1}} + A_{el1} e^{i\Delta\phi_{el1}}$$

Beide Kurven weisen jeweils vier Bereiche I, II, III, IV auf, die nachfolgend stark vereinfacht beschrieben sind.

In den äußeren Bereichen I und IV weist das zusätzliche Signal $E_{el1}$ die größere Amplitude $A_{el1}$ auf und ist somit dominant. Die resultierende Phase $\Delta\phi_1$ entspricht somit im wesentlichen der Phase des zusätzlichen Signals $\Delta\phi_{el1}$.

In den Bereichen I und II sind die beiden Signale gleichphasig und addieren sich. Die Amplitude $E_1$ steigt in diesen Bereichen kontinuierlich an und weist bei der Resonanzfrequenz $f_r$ ein Maximum auf. In den Bereichen III und IV sind die Signale gegenphasig. Im Bereich III fällt die Amplitude $A_1$ ab. An der oberen Bereichsgrenze beträgt sie null. Bei dieser nachfolgend als Antiresonanzfrequenz $f_{ar1}$ bezeichneten Frequenz weisen das Meßsignal $E_{M1}$ und das zusätzliche Signal $E_{el1}$ die gleiche Amplitude und entgegengesetzte Phasen auf. Im Bereich IV steigt die Amplitude $A_1$ erneut an.

Die Phase $\Delta\phi_1$ beträgt in den Bereichen I, II und IV 0° und im Bereich III 180°.

Ohne genaue Kenntnis des zusätzlichen Signals $E_{el1}$ ist das Meßsignal $E_{M1}$ nicht aus dem Signal $E_1$ der Empfangselektrode bestimmbar.

Tritt nun der Fall ein, daß das mechanische Schwingungsgebilde gedämpft ist oder eine reduzierte Schwingungsgüte aufweist, so zeigen Amplitude $A_{M1}$ (f) und Phase $\Delta\phi_{M1}$ (f) des Meßsignals den in den Figuren 4a und 4b gestrichelt dargestellten Verlauf. Die Amplitude $A_{M1}$(f) steigt und sinkt erheblich langsamer mit der Frequenz und weist einen deutlich geringeren Maximalwert auf. Die Phase $\Delta\phi_{M1}$ (f) zeigt keinen Phasensprung, sondern steigt kontinuierlich mit der Frequenz. Je größer die Reduktion der Schwingungsgüte des Systems ist, um so geringer ist der Maximalwert der Amplitude und um so geringer ist die Steigung der Phase. Die Phase $\Delta\phi_{M1}$ (f) erreicht asymptotisch jedoch immer die Werte 0° und 180° und bei der Resonanzfrequenz beträgt sie nach wie vor 90°. Das zusätzliche Signal $E_{el1}$ bleibt unverändert.

Amplitude $A_1$(f) und Phase $\Delta\phi_1$(f) des sich aus der amplituden- und phasengetreuen Überlagerung der beiden Komponenten ergebenden Empfangssignal $E_1$ unterscheiden sich deutlich von dem erstgenannten Beispiel, bei dem keine Reduktion der Schwingungsgüte vorlag. Die Maxima der Amplitude $A_1$(f) sind sehr viel weniger ausgeprägt und die Phase $\Delta\phi_1$ (f) weist anstelle der beiden einander entgegengesetzten Phasensprünge von jeweils 180° zwei einander entgegengerichtete kontinuierliche Phasenänderungen auf. Der maximale Phasenunterschied ist deutlich geringer als 180°. Abhängig von der Schwingungsgüte des Systems ist er sogar geringer als 90°.

Tritt also eine Dämpfung des mechanischen Schwingungsgebildes, z.B. in Schaum oder in einem viskosen Medium, oder eine anders geartete Reduktion der Schwingungsgüte des Systems auf, so weist die Phasendifferenz $\Delta\phi_1$ zwischen dem elektrischen Sendesignal und dem elektrischen Signal $E_1$ in Abhängigkeit von der Frequenz zwar noch zwei einander entgegengerichtete kontinuierliche Phasenänderungen auf, der maximale Phasenunterschied kann jedoch sehr gering sein. Die maximale Phasendifferenz ist um so geringer, je geringer der Abstand zwischen der Resonanzfrequenz $f_r$ und der Antiresonanzfrequenz $f_{ar1}$ ist.

Durch den Regelkreis, wie er aus dem Stand der Technik entnehmbar ist, wird das mechanische Schwingungssystem zu Schwingungen mit der Resonanzfrequenz $f_r$ erregt, indem eine feste, der Resonanz entsprechende Phasenbeziehung zwischen dem Sendesignal und dem Signal $E_1$ hergestellt. Damit die beschriebene Vorrichtung im unbedeckten Zustand bei hoher Schwingungsgüte funktionstüchtig ist, beträgt die feste Phasendifferenz $\Delta\phi_R$ bei dem hier gezeigten Ausführungsbeispiel 90°.

Tritt nun aufgrund der Eigenschaften des Füllgutes oder aufgrund einer Reduktion der Schwingungsgüte der Vorrichtung der vorbeschriebene Fall ein, daß die Phase $\Delta\phi_1$(f) des Signal diesen festen Wert $\Delta\phi_R$ über den gesamten Frequenzbereich nicht mehr annimmt, so ist eine zuverlässige Anregung des mechanischen Schwingungssystems nicht mehr möglich. Die Vorrichtung ist folglich nicht funktionsfähig.

Eine erfindungsgemäße Vorrichtung erzeugt dagegen nicht nur ein unverfälschtes Empfangssignal E, sondern ist auch dann noch funktionsfähig, wenn die vorbeschriebenen Vorrichtungen gemäß dem Stand der Technik versagen.

Dies wird erfindungsgemäß dadurch erreicht, daß das piezoelektrische Element 2 mindestens drei Bereiche aufweist. Auf einem ersten Bereich I ist die Empfangselektrode 21 angeordnet, auf einem zweiten und einem dritten Bereich II, III jeweils eine der Sendeelektrode 22, 23. Das piezoelektrische Element 2 ist scheibenförmig und die Empfangselektrode 21 und die beiden Sendeelektroden 22, 23 sind auf einer Kreisfläche desselben angeordnet.

Die beiden Sendeelektroden 22, 23 sind formgleich und symmetrisch zueinander und zu der Empfangselektrode 21 angeordnet. Wie aus Fig. 3 entnehmbar, ist die Empfangselektrode 21 in der Mitte des piezoelektrischen Elements 2 angeordnet und ist kreisförmig. Die beiden Sendeelektroden 22, 23 sind Kreisringsegmente. Sie befinden sich auf einander diametral gegenüberliegenden Kreisringsegmenten der Kreisfläche zu beiden Seiten der Empfangselektrode 21.

Das piezoelektrische Element 2 weist im ersten und im zweiten Bereich I, II eine Polarisation auf, die parallel zur Symmetrieachse, also senkrecht zur Kreisfläche, des piezoelektrischen Elements 2 verläuft. Der dritte Bereich III weist eine Polarisation auf, die der der beiden Bereiche I und II entgegengerichtet ist. Die Polarisationsrichtungen sind in Fig. 2 durch Pfeile und in Fig. 3 durch die Zeichen + und - angeben.

Über die erste Sendesignalleitung 221 liegt an der ersten Sendeelektrode 22 ein erstes Sendesignal $S_1$ an. Dieses liegt zusätzlich an einem Inverter 3 an. Der Inverter 3 ist z.B. ein Transistor, ein Operationsverstärker oder ein digitaler Inverter. Der Ausgang des Inverters 3 ist über die zweite Sendesignalleitung 231 mit der der zweiten Sendeelektrode 23 verbunden. Damit liegt an der zweiten Sendeelektrode 23 ein zweites Signal $S_2$ an, das amplitudengleich und gegenphasig zu einem an der ersten Sendeelektrode 22 anliegenden ersten Sendesignal $S_1$ ist. Die beiden Sen-

deelektroden 22, 23 werden also gegenphasig angeregt. Aufgrund der entgegengesetzten Polarisation in den zugehörigen Bereichen II, III führt diese gegenphasige Anregung zu einer einheitlichen Biegeschwingung des aus dem piezoelektrischen Element 2 und der Membran 12 bestehenden Verbundelements.

Bei der erfindungsgemäßen Vorrichtung ist mit der Phase bzw. der Phasendifferenz jeweils der Phasenversatz zwischen dem Empfangssignal E und einem der beiden Sendesignale $S_1$ oder $S_2$ bezeichnet. Da zwischen den beiden Sendesignale $S_1$ und $S_2$ eine feste konstante Phasenbeziehung besteht, könen beide Signale gleichermaßen als Bezugssignal herangezogen werden.

Wie bereits eingangs im Zusammenhang mit dem Stand der Technik erläutert, setzt sich auch das Empfangssignal E der Empfangselektrode 21 zusammen aus einem Meßsignal $E_M$ und zusätzlichen Signalen, die durch im wesentlichen kapazitive Kopplungen bedingt sind. Für die zusätzlichen Signale, die durch eine kapazitive Kopplung entstehen, ist die Polarisationsrichtung der einzelnen Bereiche I,II , III ohne Bedeutung. In Fig. 2 ist ein Ersatzschaltbild des piezoelektrischen Elements 2 eingezeichnet. Danach besteht zwischen der ersten Sendeelektrode 21 und der Referenzelektrode 20 eine Kapazität $C_1$. Die gleiche Kapazität $C_1$ besteht symmeteriebedingt auch zwischen der zweiten Sendeelektrode 23 und der Referenzelektrode 20. Zwischen der Empfangselektrode 21 und der Referenzelektrode 20 besteht eine Kapazität $C_2$. Zwischen jeder Sendeelektrode 22, 23 und der Empfangselektrode 21 besteht eine Kapazität $C^*$. Das Ersatzschaltbild ist somit symmetrische zur Symmetrieachse des piezoelektrischen Elements 2. An der Empfangselektrode 21 überlagern sich somit zwei zusätzliche Signale $E_{el1}$ und $E_{el2}$, von denen ein erstes $E_{el1}$ auf kapazitive Kopplungen der ersten Sendeelektrode 22 und ein zweites $E_{el2}$ auf kapazitive Kopplungen der zweiten Sendeelektrode 23 zurückgehen. Da die Anordnung symmetrisch ist, weisen die beiden zusätzlichen Signale $E_{el1}$, $E_{el2}$ die gleichen Amplituden auf. Aufgrund der Amplitudengleichheit und der Gegenphasigkeit der beiden Sendesignal $S_1$ und $S_2$, sind die beiden zusätzlichen Singale $E_{el1}$, $E_{el2}$ jedoch gegenphasig. Die Überlagerung der beiden zusätzlichen Signale $E_{el1}$, $E_{el2}$ bedeutet somit, daß die beiden Signale $E_{el1}$, $E_{el2}$ sich gegenseitig aufheben.

Es steht hiermit an der Empfangselektrode 21 ein Empfangssignal E zur Verfügung, das völlig unverfälscht dem gewünschten Meßsignal entspricht und in dem keinerlei zusätzliche Signale enthalten sind.

Amplitude A und Phase $\Delta\phi$ des Empfangssignals E weisen in Abhängigkeit von der Frequenz genau wie das Meßsignal $E_M$ den für einen harmonischen Oszillator typischen Verlauf auf.

Damit liegt bei der Resonanzfrequenz $f_r$ des mechanischen Schwingungsgebildes 1 immer der gleiche feste Wert der Phasendifferenz $\Delta\phi_R$ zwischen dem ersten Sendesignal $S_1$ und dem Empfangssignal E vor, unabhängig von der Schwingungsgüte des Systems. Das Empfangssignal E ist damit hervorragend geeignet für den Betrieb eines Regelkreises, der dazu dient, die feste Phasenbeziehung $\Delta\phi_R$ zwischen dem ersten Sendesignal $S_1$ und dem Empfangssignal E einzustellen.

Ein Ausführungsbeispiel eines derartigen Regelkreises ist in Fig. 2 dargestellt. Dort ist das Empfangssignal E über die Empfangssignalleitung 5, über einen Verstärker 7 und einen Phasenschieber 8, der dessen Phase um den bestimmten konstanten Wert $\Delta\phi_R$ verschiebt, auf das erste Sendesignal $S_1$ zurückgekoppelt. Der Verstärker 7 ist so zu dimensionieren, daß die Selbsterregungsbedingung erfüllt ist. Das mechanische Schwingungsgebilde wird folglich über das piezoelektrische Element 2 zu Schwingungen mit dessen Resonanzfrequenz $f_r$ angeregt.

Ist das Schwingungsgebilde von dem Füllgut bedeckt, so hat die Resonanzfrequenz $f_r$ einen geringeren Wert, als wenn das Schwingungsgebilde frei schwingt. Der fest Wert der Phasendifferenz ist unabhängig davon, ob das Schwingungsgebilde von dem Füllgut bedeckt ist oder nicht.

Das Empfangssignal E liegt weiterhin über den Verstärker 7, den Phasenschieber 8 und den Inverter 3 am Eingang einer Auswerteeinheit 9 an. Es ist auch möglich, das unverstärkte nicht invertierte Empfangssignal E direkt an den Eingang anzulegen. Es bietet sich jedoch an, das verstärkte Signal zu verwenden. Die Invertierung und die Phasenverschiebung beeinträchtigen die Frequenz dieses Signals nicht.

Mittels einer Frequenzmeßschaltung 91 wird dessen Frequenz bestimmt und das Ergebnis einem komparator 92 zugeführt. Dieser vergleicht die gemessene Frequenz mit einer in einem Speicher abgelegten Referenzfrequenz $f_R$. Ist die gemessene Frequenz kleiner als die Referenzfrequenz $f_R$ gibt die Auswerteeinheit 9 ein Ausgangssignal ab, das angibt, daß das mechanische Schwingungsgebilde von einem Füllgut bedeckt ist. Weist die Frequenz einen Wert auf der größer als die Referenzfrequenz $f_R$ ist, so gibt die Auswerteeinheit 9 ein Ausgangssignal ab, das angibt, daß das mechanische Schwingungsgebilde nicht vom Füllgut bedeckt ist.

## Patentansprüche

**1.** Vorrichtung zur Feststellung und/oder Überwachung eines vorbestimmten Füllstandes in einem Behälter, welche Vorrichtung umfaßt:

- ein auf der Höhe des vorbestimmten Füllstandes angebrachtes mechanisches Schwingungsgebilde (1),
- ein piezolelektrisches Element (2),

-- das das Schwingungsgebilde (1) zu Schwingungen anregt und dessen Schwingungen aufnimmt, **dadurch gekennzeichnet, dass** das piezoelektrische Element (2)
-- mindestens drei Bereiche aufweist,

--- einen ersten eine Empfangselektrode (21) aufweisenden Bereich (I), einen zweiten eine erste Sendeelektrode (22) aufweisenden Bereich (II) und einen dritten eine zweite Sendeelektrode (23) aufweisenden Bereich (III),

- wobei die beiden Sendeelektroden (22, 23) formgleich sind und symmetrisch zueinander und zu der Empfangselektrode (21) angeordnet sind,
- wobei das piezoelektrische Element (2) im ersten und im zweiten Bereich (I, II) eine Polarisation aufweist, die einer Polarisation des dritten Bereichs (III) entgegengerichtet ist, und **dass**
- ein erstes Mittel zum Anlegen eines ersten Sendesignals (S1) an die erste Sendeelektrode (22) vorhanden ist und
- ein zweites Mittel (3) zum Anlegen eines zum ersten Sendesignal (S1) amplitudengleichen und gegenphasigen zweiten Sendesignals (S2) an die zweite Sendeelektrode (23) vorhanden ist.

**2.** Vorrichtung nach Anspruch 1, bei der ein Regelkreis vorgesehen ist, der eine zwischen dem ersten Sendesignal ($S_1$) und dem Empfangssignal (E) bestehende Phasendifferenz auf einen bestimmten konstanten Wert ($\Delta\phi_R$) regelt, bei dem das Schwingungsgebilde (1) Schwingungen mit einer Resonanzfrequenz ($f_r$) ausführt.

**3.** Vorrichtung nach Anspruch 1, bei der auf dem piezoelektrischen Element (2) eine mit einem Bezugspotential verbundene Referenzelektrode (20) angeordnet ist.

**4.** Vorrichtung nach Anspruch 1, bei der das piezoelektrische Element (2) scheibenförmig ist und die Empfangselektrode (21) und die beiden Sendeelektroden (22, 23) auf einer Kreisfläche desselben angeordnet sind.

**5.** Vorrichtung nach Anspruch 4, bei der die beiden Sendeelektroden (22, 23) Kreisringsegmente sind und auf einander diametral gegenüberliegenden Kreisringsegmenten der Kreisfläche angeordnet sind.

**6.** Vorrichtung nach Anspruch 1, bei der das erste Sendesignal ($S_1$) an einem Inverter (3) anliegt und das zweite Sendesignal ($S_2$) gleich einem Ausgangssignal des Inverters (3) ist.

**Claims**

**1.** A device for determining and/or monitoring a predetermined filling level in a container, which device comprises:

- a mechanical oscillatory structure (1) mounted at the height of the predetermined filling level,
- a piezoelectric element (2),

-- which excites the oscillatory structure (1) into oscillations and picks up the oscillations thereof, **characterised in that** the piezoelectric element (2)
-- has at least three zones,

--- a first zone (I) having a receiving electrode (21), a second zone (II) having a first transmitting electrode (22), and a third zone (III) having a second transmitting electrode (23),

- the two transmitting electrodes (22, 23) having a similar shape and being disposed symmetrically to one another and to the receiving electrode (21), and
- the piezoelectric element (2) having a polarisation in the first and in the second zone (I, II) which is opposed to a polarisation of the third zone (III), and **in that**
- there is a first means for applying a first transmitted signal ($S_1$) to the first transmitting electrode (22), [and][1]
- there is a second means (3) for applying a second transmitted signal ($S_2$), of equal amplitude and in phase opposition to the first transmitted signal ($S_1$), to the second transmitting electrode (23).

[1]'And' assumed by the translator - unclear in the source document.

**2.** A device according to Claim 1, in which a closed loop control circuit is provided which adjusts a phase difference, existing between the first transmitted signal ($S_1$) and the received signal (E), to a certain constant value ($\Delta\Phi_R$) at which the oscillatory structure (1) performs oscillations with a resonance frequency ($f_r$).

**3.** A device according to Claim 1, in which a reference electrode (20) connected to a reference potential is disposed on the piezoelectric element (2).

**4.** A device according to Claim 1, in which the piezoelectric element (2) is disc-shaped and the receiving electrode (21) and the two transmitting electrodes (22, 23) are disposed on a circular surface of the said element.

**5.** A device according to Claim 4, in which the two transmitting electrodes (22, 23) are circular ring segments and are disposed on mutually diametrically opposite circular ring segments of the circular surface.

**6.** A device according to Claim 1, in which the first transmitted signal ($S_1$) is applied to an inverter (3) and the second transmitted signal ($S_2$) is equal to an output signal of the inverter (3).


**Revendications**

**1.** Dispositif destiné à la détermination et/ou la surveillance d'un niveau prédéfini dans un récipient, lequel dispositif comprend :

- un vibrateur mécanique (1) installé à hauteur du niveau prédéfini,
- un élément piézolélectrique (2),

-- qui excite le vibrateur (1) en vibrations
et qui absorbe ses vibrations, **caractérisé en ce que** l'élément piézolélectrique (2) présente au moins trois zones,

--- une première zone (I) comportant une électrode de réception (21), une deuxième zone (II) comportant une première électrode d'émission (22) et une troisième zone (III) comportant une deuxième électrode d'émission (23),

- les deux électrodes d'émission (22, 23) étant de forme identique et disposées de façon symétrique l'une par rapport à l'autre et par rapport à l'électrode de réception (21),
- l'élément piézolélectrique (2) présentant dans la première et dans la deuxième zone (I, II) une polarisation, qui est inverse à une polarisation de la troisième zone (III), et **en ce que**
- est présent un premier moyen pour l'application d'un premier signal d'émission ($S_1$) sur la première électrode d'émission (22) et
- est présent un deuxième moyen (3) pour l'application d'un deuxième signal d'émission ($S_2$), d'amplitude égale et en opposition de phase par rapport au premier signal d'émission ($S_1$), sur la deuxième électrode d'émission (23).

**2.** Dispositif selon la revendication 1, pour lequel est prévu un circuit de régulation, qui régule un déphasage existant entre le premier signal d'émission ($S_1$) et le signal de réception (E) à une valeur constante déterminée ($\Box\Box_R$), à laquelle le vibrateur (1) génère des vibrations à une fréquence de résonance ($f_r$).

**3.** Dispositif selon la revendication 1, pour lequel est disposé, sur l'élément piézolélectrique (2), une électrode de référence (20) associée à un potentiel de référence.

**4.** Dispositif selon la revendication 1, pour lequel l'élément piézolélectrique (2) est en forme de disque et l'électrode de réception (21) et les deux électrodes d'émission (22, 23) sont disposées sur une surface circulaire du même élément.

**5.** Dispositif selon la revendication 4, pour lequel les deux électrodes d'émission (22, 23) sont des segments d'un anneau de cercle et sont disposés sur des segments d'anneau de cercle diamétralement opposés de la surface circulaire.

6. Dispositif selon la revendication 1, pour lequel le premier signal d'émission ($S_1$) est appliqué à un inverseur (3) et le deuxième signal d'émission ($S_2$) équivaut à un signal de sortie de l'inverseur (3).

221  5  231  13

22  21  23  2

11

12  20

1

14  14

FIG. 1

FIG. 2

FIG. 3

FIG. 4a

FIG. 4b

FIG. 5a

FIG. 5b

FIG. 6a

FIG. 6b